# EUROPEAN PATENT APPLICATION

(11) **EP 3 339 723 A1**
(43) Date of publication of application: **27.06.2018**
(21) Application number: 17204538.7
(22) Date of filing: 29.11.2017
(51) Int. Cl.: F21V 8/00

(54) **LIGHT GUIDE AND METHOD OF CREATING A LIGHT GUIDE BY SCREEN-PRINTING**

(30) Priority: 22.12.2016 US 201615387999
(71) Applicant: Dura Operating, LLC, Auburn Hills, MI 48326 (US)
(72) Inventor: Stvartak, Christopher James, Waterford, MI Michigan 48327 (US); Allison, Leonard, North Royalton, OH Ohio 44133 (US)
(74) Representative: Bungartz Christophersen Partnerschaft mbB Patentanwälte

(57) **Abstract**

A light guide system includes a substrate with multiple light sources connected to the substrate. Multiple zones are individually positioned each proximate to one of the light sources. Each of the multiple zones includes a translucent area back-lit by energizing one of the light sources. A polymeric material is applied onto individual pairs defined by one of the multiple light sources and one of the multiple zones. The polymeric material after subsequent curing defines a light guide for each of the pairs for transmission of light generated by the light source of each pair. A reflective coating is applied onto the at least one external facing surface of the light guide, the reflective coating defining a material different from the polymeric material.

## Description

### FIELD

The present disclosure relates generally to light guides used to guide light from a light source to a back-lighted component.

### BACKGROUND

The statements in this section merely provide background information related to the present disclosure and may or may not constitute prior art.

Electronic assemblies including back-lighted assemblies are commonly encapsulated in a low-pressure molding process, in which a liquid polymer is injected into a mold that forms the polymer into a specific shape around the components being encapsulated, including a light source. The light source commonly includes one or more light emitting diodes (LEDs). Known low-pressure molding for this purpose has the disadvantage of requiring both a mold and a molding machine. Alternatively, conformal coatings are applied to the assemblies including to printed circuit boards to protect the components from environmental hazards such as moisture, ambient humidity, and dust or other particles that might cause a short circuit, as well as to insulate from short-duration temperature extremes. Most conformal coatings are applied as a liquid. The liquid can take one of several forms: a liquid monomer in which the molecules of the monomer crosslink when cured, such as by exposure to heat or ultraviolet (UV) radiation, after application; a liquid mixture of two or more monomers in which the molecules of the monomers crosslink when cured, such as by exposure to heat or UV radiation, after application; or a polymer dissolved in a solvent, with the solvent being evaporated by heat after application, leaving the solid polymer behind as a coating.

Light emitted by the light source is commonly directed to a surface or area to be illuminated using a light guide. Known light guides are molded from a polymeric material different from the conformal coating, such as a clear or substantially clear plastic including polymethyl methacrylate (PMMA), a transparent thermoplastic often used as a glass substitute, or a polycarbonate polymer.

While light guide systems are known, such systems commonly require first molding one or more light guides and then incorporating the one or more light guides onto a substrate such as a circuit board with LEDs, sometimes followed by a subsequent injection molding process to encapsulate the entire assembly while providing a desired finished geometry using the mold geometry. This field can therefore benefit from improved and simplified light guide designs.

### SUMMARY

According to several aspects, a light guide system includes a substrate. A light source is connected to the substrate. A zone of the substrate is created proximate to the light source wherein a transparent or translucent area of the zone is back-lit by energizing the light source. A polymeric material is applied onto each of the substrate, the light source and the zone, the polymeric material creating a light guide for transmission of light generated by the light source to the transparent or translucent area.

In one aspect, the polymeric material defines an aliphatic urethane acrylate monomer blend.

In another aspect, the light source defines a light emitting diode.

In another aspect, a thickness of the polymeric material is substantially equal to a thickness of a template temporarily applied over the substrate during application of the polymeric material.

In another aspect, a thickness of the polymeric material is selected to completely cover the light source.

In another aspect, a thickness of the polymeric material is selected to completely cover the light source and the zone.

In another aspect, at least one conductive trace is connected to the substrate and electrically connected to the light source.

In another aspect, a thickness of the polymeric material is selected to completely cover the light source, the zone and the conductive trace.

In another aspect, a shape of the transparent or translucent area defines at least one alphanumeric character.

In another aspect, a reflective coating is applied onto one or more surfaces of the light guide to reflect light toward the transparent or translucent area.

In another aspect, the reflective coating includes a metal material.

According to further aspects, the reflective coating includes a thermoplastic material molded over the one or more surfaces of the light guide; and prior to curing the polymeric material defines a liquid polymer.

In another aspect, a thermoplastic material is molded over the one or more surfaces of the light guide.

In another aspect, the substrate and the light guide are together flexible after the polymeric material is cured.

According to further aspects, a light guide system includes a substrate having multiple light sources connected to the substrate. At least one conductive trace is connected to the substrate and is electrically connected to at least one of the multiple light sources. Multiple zones are individually positioned each proximate to one of the light sources. Each of the multiple zones includes a transparent or translucent area back-lit by energizing one of the light sources. A polymeric material is applied onto individual groups defined by one of the multiple light sources, one of the conductive traces, and one of the multiple zones. The polymeric material after subsequent curing defines a light guide for each of the groups for transmission of light generated by the light source of each group.

In another aspect, the light guide includes at least one external facing surface and a reflective coating is applied onto the at least one external facing surface of the light guide, the reflective coating defining a metal.

In another aspect, the light guide includes at least one external facing surface. A reflective coating is applied onto the at least one external facing surface of the light guide, wherein the reflective coating defines a thermoplastic material molded over the at least one external facing surface of the light guide.

In another aspect, the polymeric material defines a substantially clear adhesive.

In another aspect, the polymeric material defines a substantially clear aliphatic urethane acrylate monomer blend.

According to further aspects, a light guide system includes a substrate having multiple light sources connected to the substrate. Multiple zones are individually each positioned proximate to one of the light sources. Each of the multiple zones includes a transparent or translucent area of the substrate back-lit by energizing one of the light sources. A light transmissive aliphatic urethane acrylate monomer blend is applied onto individual pairs defined by one of the multiple light sources and one of the multiple zones. The aliphatic urethane acrylate monomer blend defines a light guide for each of the pairs for transmission of light generated by the light source of each pair through a predetermined area of the substrate. A reflective coating is applied onto the at least one external facing surface of the light guide, the reflective coating defining a material different from the aliphatic urethane acrylate monomer blend.

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is a top perspective view of a light guide system of the present disclosure;
FIG. 2 is a front elevational cross sectional view taken at section 2 of FIG. 1;
FIG. 3 is a front elevational cross sectional view similar to FIG. 2 during application of a conformal coating material via a template;
FIG. 4 is a front elevational cross sectional view modified from FIG. 3 to show a scraper;
FIG. 5 is a front elevational cross sectional view modified from FIG. 4 to show spreading of the conformal coating material;
FIG. 6 is a front elevational cross sectional view modified from FIG. 5 after spreading of the conformal coating material and removal of the template;
FIG. 7 is a front elevational cross sectional view similar to FIG. 6;
FIG. 8 is a front elevational cross sectional view modified from FIG. 7 by the addition of a thermoplastic material coating; and
FIG. 9 is a front elevational cross sectional view modified from FIG. 7 by the addition of a metal material reflective coating.

### DETAILED DESCRIPTION

The following description is merely exemplary in nature and is not intended to limit the present disclosure, application, or uses.

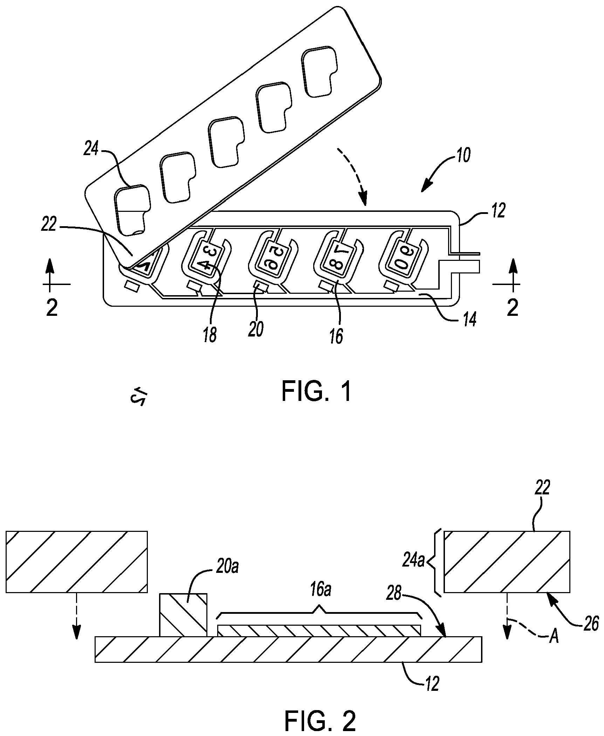

With reference to FIG. 1, a system and method for preparing lighted electronic assemblies is generally indicated with reference to a light guide system 10. According to several aspects, the light guide system 10 is adapted for use as a back-lighted numbered vehicle door keyless entry system, but can be used in any application requiring a light guide. The light guide system 10 provides a substrate 12 onto which is mounted multiple conductive traces 14 which provide individual areas or zones 16 wherein transparent or translucent areas 18 such as defining at least one alphanumeric character may be back-lit. Each of the transparent or translucent areas 18 is individually provided with a light source 20 such as an LED positioned proximate to the transparent or translucent area 18. According to several aspects, each transparent or translucent area 18 can include an object such as at least one alphanumeric character, such as a whole number between zero and nine. More than one alphanumeric character can also be provided in each transparent or translucent area 18. The transparent or translucent areas 18 can also include printed alphanumeric characters visible when the transparent or translucent area 18 is back-lit.

A template 22 is prepared which includes multiple apertures 24 each spaced and sized to correspond to one of the zones 16, its corresponding translucent area 18, and one of the light sources 20. The template 22 can be made of any suitable material such as a polymeric material or a metal. The template 22 is adapted to be laid flat over the substrate 12 with the individual apertures 24 positioned directly over one of the transparent or translucent areas 18 with each sized to include at least a portion of one of the conductive traces 14 and one of the individual light sources 20. Individual pairs are therefore defined such that each pair includes one of the light sources 20 and one of the zones 16, each pair having one of the apertures 24 of the template 22 assigned thereto. Individual groups are also therefore defined each including one of the light sources 20, one of the conductive traces 14, and one of the zones 16, each group having one of the apertures 24 of the template 22 assigned thereto.

Referring to FIG. 2 and again to FIG. 1, a portion of the template 22 is presented during its installation, with one of the pairs defined by a single one of the apertures 24a located adjacent to an exemplary one of the zones 16a and one of the light sources 20a. The following discussion of the aperture 24a, the zone 16a, and the light source 20a applies equally to the remaining apertures 24, the zones 16, and the light sources 20 of the template 22. A surface 26 of the template 22 is substantially flat, or can be adapted to match a contour of a face 28 of the substrate 12. The template is moved toward the substrate 12 in the direction of arrow "A".

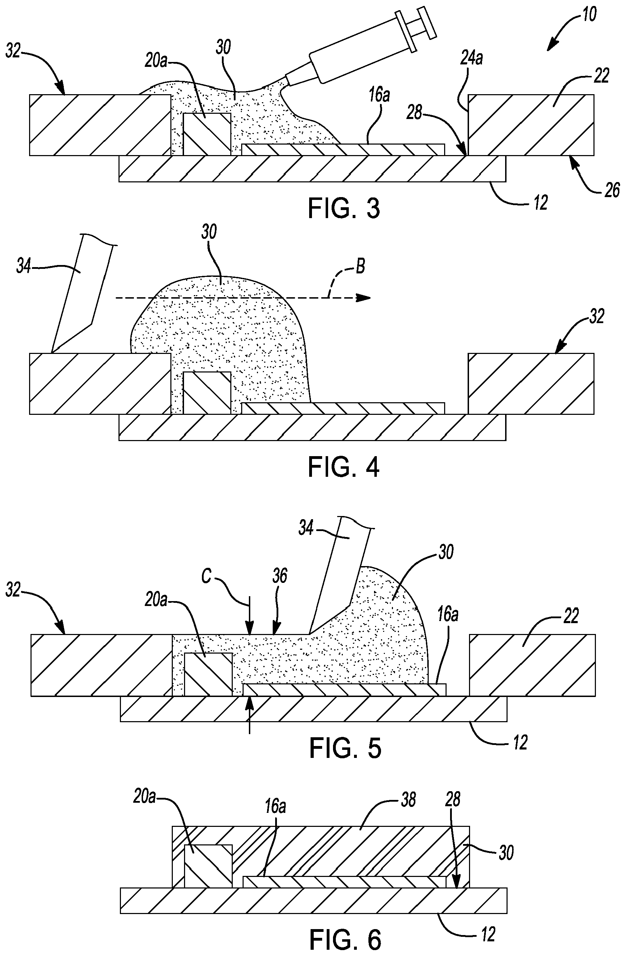

Referring to FIG. 3 and again to FIGS. 1 through 2, the surface 26 of the template 22 is brought into direct contact with the face 28 of the substrate 12. A conformal coating material 30 in the form of a liquid polymer, a substantially clear adhesive, or a substantially clear aliphatic urethane acrylate monomer blend is then dispensed into the aperture 24a in a predetermined volume sufficient to completely cover the zone 16a, at least a portion of the conductive trace 14 within the aperture 24a, and the and the light source 20a. To ensure complete coverage of the aperture 24a, the conformal coating material 30 is applied until it overflows the aperture 24a onto an outer surface 32 of the template 22, which is oppositely facing with respect to the surface 26.

Referring to FIG. 4 and again to FIG. 3, a device 34 such as a flat, straight-edged scraper is brought into direct contact with the outer surface 32 and moved in a direction "B" to force ("screen") the conformal coating material 30 into the aperture 24a in the template and onto the substrate 12. The device 34 is dragged across the outer surface 32.

Referring to FIG. 5 and again to FIGS. 3-4, the conformal coating material 30 is forced by the device 34 into the aperture 24a in the template 22 where the conformal coating material 30 takes on the geometry or shape of the aperture 24a. After screening, the conformal coating material 30 within the aperture 24a will define a height "C" equal to a thickness of the template 22. The height "C" and therefore the thickness of the template 22 is predetermined to provide a cross section of the conformal coating material 30 sufficient to cover and protect the light source 20a and providing for subsequent transmission of light emitted by the light source 20a.

Referring to FIG. 6 and again to Fig. 5, after the conformal coating material 30 fills the aperture 24a the device 34 is removed and the conformal coating material 30 is cured to solidify the conformal coating material 30. After curing, the conformal coating material 30 solidifies and will retain the shape of the aperture 24a in the template 22. The template 22 is then removed from contact with the substrate 12, leaving the now cured conformal coating material 30 which creates a light guide 38. The outer perimeter of the light guide 38 is defined by the geometry of the aperture 14a. The light guide 38 incorporates the light source 20a and the zone 16a. The conformal coating material 30 defining the light guide 38 will retain the shape due to (a) high viscosity, (b) partial curing by exposure to UV radiation prior to removal of the template 22, (c) partial curing by exposure to heat prior to removal of the template 22, or (d) solidification due to cooling prior to removal of the template 22.

According to several aspects, the substrate 12 and the light guide 38 are substantially rigid. According to further aspects, the polymeric material selected for the conformal coating material 30 of the light guide 38 is selected such that after curing the material of the light guide 38 and the substrate 12 are together flexible. By "flexible" is herein meant the light guide 38 and the substrate 12 can be deflected from an as-molded condition to a different contour without detrimentally effecting the funtionality of the light guide 38 and the substrate 12, and can further be deflected back to the original as-molded condition without detrimentally effecting the funtionality of the light guide 38 and the substrate 12.

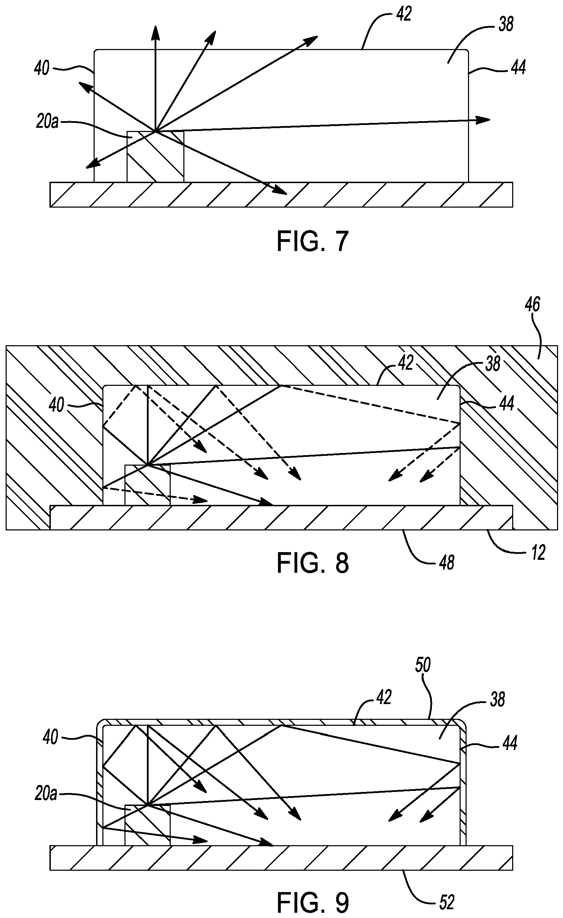

Referring to FIG. 7 and again to FIG. 6, with no subsequent processing, the light guide 38 thus produced will allow much of the light from the light source 20a to escape in random directions, such as via externally facing surfaces 40, 42 ,44 of the light guide 38. It is expected that the entire light guide 38 will glow when the light source 20a is activated, thus significantly reducing the amount of light available to backlight the transparent or translucent area 18, if no further covering is applied to the light guide 38.

Referring to FIG. 8 and again to FIGS. 6-7, the light guide 38 can be modified by subsequently molding a standard thermoplastic material 46 over the surfaces 40, 42 ,44 of the light guide 38. The thermoplastic material 46 will cause at least some of the light to be reflected internally, within the light guide 38, so that more of the light is emitted at a specific area 48 of the substrate 12 where backlighting is desired.

Referring to FIG. 9 and again to FIGS. 6-8, in lieu of the thermoplastic material 46, a reflective coating 50, such as a thin layer of a metal may be applied to the surfaces 40, 42 ,44 of the light guide 38 for example using a vacuum-sputtering process. The reflective coating 50 achieves substantially total internal reflectance and ensures that the maximum possible fraction of the output from the light source 20a is visible in a location 52 of the substrate 12 where backlighting is desired. According to several aspects, the standard thermoplastic material 46 can also then be molded over the reflective coating 50.

According to several aspects, a light guide system 10 includes a substrate 12. Multiple light sources 20 are connected to the substrate 12. At least one conductive trace 14 is connected to the substrate 12 and is electrically connected to the light source 20. Each of multiple zones 16 are individually positioned proximate to one of the light sources 20. Each of the multiple zones 16 includes a transparent or translucent area 18 back-lit by energizing one of the light sources 20. A polymeric material defining a conformal coating material 30 is applied onto individual groups defined by one of the multiple light sources 20, one of the conductive traces 14, and one of the multiple transparent or translucent areas 18. The conformal coating material 30 after subsequent curing defines a light guide 38 for each of the groups for transmission of light generated by the light source 20 of each group.

A light guide system of the present disclosure has several advantages. These include but are not limited to the light guide system of the present disclosure requires only a screen (template) and a scraping device to prepare. The light guide of the present disclosure is formed using for example a polymer such as an aliphatic urethane acrylate monomer blend or a clear adhesive which is transparent or translucent or substantially clear when cured, to promote light transmission. The light guide system of the present disclosure also does not require a mold or an injection molding process to apply. By eliminating a component and a fabrication step compared to systems having a separately molded and independently installed light guide, the light guide system of the present disclosure will reduce the cost of a typical backlighted electronic assembly. By being applied via a template which can be made quickly and at little cost, for example by die-cutting a thin sheet of metal, the light guide thus produced can be made into complex shapes. By the nature of applying the material via a thin template, the light guide thus produced can also be made very thin and therefore reduce the thickness, material cost, and weight of the entire electronic assembly.

The description of the present disclosure is merely exemplary in nature and variations that do not depart from the gist of the present disclosure are intended to be within the scope of the present disclosure. Such variations are not to be regarded as a departure from the spirit and scope of the present disclosure.

## Claims

1. A light guide system (10), comprising:
a substrate (12);
a light source (20) connected to the substrate (12);
a zone (16) of the substrate (12) proximate to the light source (20) wherein a transparent or translucent area (18) of the zone (16) is back-lit by energizing the light source (20); and
a polymeric material applied onto each of the substrate (12), the light source (20) and the zone (16), the polymeric material creating a light guide (38) for transmission of light generated by the light source (20) to the transparent or translucent area (18).

2. The light guide system (10) of claim 1, wherein the polymeric material defines an aliphatic urethane acrylate monomer blend.

3. The light guide system (10) of one of the preceding claims, further including at least one conductive trace (14) connected to the substrate (12) and electrically connected to the light source (20).

4. The light guide system (10) of one of the preceding claims, wherein a thickness of the polymeric material is substantially equal to a thickness of a template (22) temporarily applied over the substrate (12) during application of the polymeric material.

5. The light guide system (10) of one of the preceding claims, wherein a thickness of the polymeric material is predetermined to completely cover the light source (20), preferably also the zone (16) and more preferably a portion of the conductive trace (14).

6. The light guide system (10) of one of the preceding claims, wherein a shape of the transparent or translucent area (18) defines at least one alphanumeric character.

7. The light guide system (10) of one of the preceding claims, further including a reflective coating (50) applied onto one or more surfaces of the light guide (38) to reflect light toward the transparent or translucent area (18).

8. The light guide system (10) of claim 7, wherein the reflective coating (50) includes a metal material and/or includes a thermoplastic material molded over the one or more surfaces of the light guide (38).

9. The light guide system (10) of one of the preceding claims, wherein:
prior to curing, the polymeric material defines a liquid polymer; and
the substrate (12) and the light guide (38) are together flexible after the polymeric material is cured.

10. The light guide system (10) of one of the preceding claims, further including a thermoplastic material molded over the one or more surfaces of the light guide (38).

11. A light guide system (10), comprising:
a substrate (12);
multiple light sources (20) connected to the substrate (12);
at least one conductive trace (14) connected to the substrate (12) and
electrically connected to the light sources (20);
multiple zones (16) individually positioned proximate to one of the light
sources, each of the multiple zones (16) including a transparent or translucent area (18) back-lit by energizing one of the light sources (20); and
a polymeric material applied onto individual groups defined by one of the multiple light sources (20), one of the conductive traces (14), and one of the multiple zones (16), the polymeric material after subsequent curing defining a light guide (38) for each of the groups for transmission of light generated by the light source (20) of each group.

12. The light guide system (10) of claim 11, further including:
at least one external facing surface of the light guide (38); and
a reflective coating (50) applied onto the at least one external facing
surface of the light guide (38);
wherein the reflective coating (50) defines a metal.

13. The light guide system (10) of one of the claims 11 or 12, further including:
at least one external facing surface of the light guide (38); and
a reflective coating (50) applied onto the at least one external facing
surface of the light guide (38);
wherein the reflective coating (50) defines a thermoplastic material molded over the at least one external facing surface of the light guide (38).

14. The light guide system (10) of one of the claims 11 to 13, wherein the polymeric material defines a substantially clear adhesive and/or a substantially clear aliphatic urethane acrylate monomer blend.

15. A light guide system (10), comprising:
a substrate (12);
multiple light sources (20) connected to the substrate (12);
multiple zones (16) individually positioned proximate to one of the light
sources, each of the multiple zones (16) including a transparent or translucent area (18) of the substrate (12) back-lit by energizing one of the light sources (20);
a light transmissive aliphatic urethane acrylate monomer blend applied onto individual pairs defined by one of the multiple light sources (20) and one of the multiple zones (16), the aliphatic urethane acrylate monomer blend defining a light guide (38) for each of the pairs for transmission of light generated by the light source (20) of each pair through a predetermined area of the substrate (12); and
a reflective coating (50) applied onto the at least one external facing
surface of the light guide (38), the reflective coating (50) defining a material different from the aliphatic urethane acrylate monomer blend.
